# EUROPEAN PATENT APPLICATION

(11) **EP 2 937 523 A1**
(43) Date of publication of application: **28.10.2015**
(21) Application number: 14166021.7
(22) Date of filing: 25.04.2014
(51) Int. Cl.: F01D 25/10, F01D 25/14, F01D 25/32

(54) **Steam turbine with means for warming the casing**

(71) Applicant: Siemens Aktiengesellschaft, 80333 München (DE)
(72) Inventor: Basu, Amitrajit, 110078 New Delhi (IN); Kumar, Gaurav, 110019 New Delhi (IN); Yadav, Anujkumar, 110052 New Delhi (IN)
(74) Representative: Patentanwaltskanzlei WILHELM & BECK

(57) **Abstract**

The present invention provides a steam turbine (100) with a casing (104) comprising a means (106) for warming the casing (104) during start-up process of the steam turbine (100). The steam turbine (100) comprises a rotor (102) and the casing (104) enclosing the rotor (102). The casing (104) is provided with the means (106) adapted to be filled with a heating medium during start-up process of the steam turbine (100) such that the casing (104) absorbs heat from the heating medium filled in said means (106), resulting in faster warming up of the casing (104) during the start-up process of the steam turbine (100).

## Description

The present invention relates to the field of steam turbine, and more particularly relates to warming of steam turbine casing during start-up process.

Without proper preheating during the start-up process of the steam turbine, high temperature steam enters the initially cold steam turbine. Due to this, the casing of the steam turbine which is at room temperature is subject to the high temperature steam. Since, difference in temperature of the casing and the temperature of the steam in contact with the casing is higher, high thermal stress is induced in the casing of the steam turbine. Consequently, the casing may undergo thermal shock and low cycle fatigue related failures due to high thermal stress induced over start-up and shut-down cycles. Typically, this situation is overcome by minimizing the difference in temperature of the casing and the temperature of the steam entering the steam turbine. To achieve this, the casing is gradually heated during start-up process of the steam turbine by introducing steam at pre-defined parameters into the steam turbine. This increases the temperature of the casing, and hence minimizes the difference between the casing temperature and the temperature of the steam, thereby reducing effect due to thermal stress. However, warming the casing may take several hours and may delay operation of the steam turbine. The delay may add up to non-productive time associated with operation of the steam turbine. It is desirable that the non-productive time be kept minimal especially when daily shut-down and start-up is a norm.

Due to the design of the steam turbine, the casing normally has uneven thickness. Thus, thicker portions of casing such as flanges are slowly heated compared to thinner portions of the casing. This may introduce thermal stress in the portions which are insufficiently heated during the start-up process. If these portions are heated for additional amount of time, then it would add up to the delay in operation of the steam turbine.

In light of the foregoing, there is a need to provide efficient and faster warming of the steam turbine casing during the start-up process of the steam turbine while keeping effect due to thermal stress minimal.

Therefore, it is the object of the present invention to provide a steam turbine with a casing which can be heated in fast and efficient manner during start-up process of the steam turbine.

The object of the present invention is achieved by a steam turbine having a rotor, and a casing which encloses the rotor and is provided with a means for warming the casing. The means for warming the casing is adapted to be filled with a heating medium during start-up process of the steam turbine. The heating medium may include steam from auxiliary boiler, flue gas from gas turbine, hot air from air compressor, and the like. The heating medium filled in said means transfers heat to the casing, thereby warming the casing. Advantageously, the means for warming the casing provides faster heating of the casing, thereby reducing delay in operation of the steam turbine. Also, warming of the casing reduces difference between temperature of the casing and temperature of steam entering the steam turbine after operation of the steam turbine. Thus, thermal stresses on the casing are reduced.

In one embodiment, the means for warming the casing comprises at least one cavity provided on the inner surface of the casing. The cavity comprises a hollow space that can carry the heating medium inside the casing for faster warming of the casing. The cavity can be of any shape and size based on heating rate desired. The cavities can be straight or contoured. In this embodiment, heating medium such as stagnant steam or flowing steam from within the steam turbine can be used to fill the cavity to warm up the casing.

In another embodiment, the means for warming the casing comprises at least one cavity provided on the outer surface of the casing. Thus, the heating medium from an external source can be used to fill the at least one cavity to warm up the casing. For example, an auxiliary boiler may supply steam to the at least one cavity. Alternatively, a compressor may supply hot air to the at least one cavity. Similarly, a gas turbine may supply flue gas to the at least one cavity.

In yet another embodiment, the means for warming the casing comprises a hollow portion extending along a longitudinal axis of the casing. The hollow portion is provided with an inlet on the face of the casing for filling the heating medium into the hollow portion. The hollow portion may also be provided with an outlet to drain the condensate formed from the heating medium, specifically steam. Thus, the casing can be warmed quickly as area of casing exposed to the heating medium is more and penetration of the heating medium in the casing is also more.

In accordance with the above embodiments, the means for warming the casing is provided with means for removing condensate. In an embodiment, the means for warming the casing is provided with a slope which facilitates removal of condensate.

In the foregoing description, the term 'casing' refers to inner casing and/or outer casing of the steam turbine.

It can be noted that, the means for warming the casing can be provided on casing body as well as flanges of the casing. Typically, the flanges require more time to heat during the start-up process due to their thickness. According to the present invention, the means for warming the casing facilitates faster heating of the flanges and hence delay in operation of the steam turbine is reduced. This is possible as the means for warming the casing carry the heating medium deep into the flanges. Similarly, the means for warming the casing can also heat the casing body faster.

The present invention can also be useful in combined cycle power plants where gas turbine and steam turbine are started simultaneously with high temperature steam being supplied to the steam turbine from a separate source such as auxiliary boiler.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1A: illustrates a cross sectional view of a steam turbine with a casing according to one embodiment of the present invention.
- FIG 1B: illustrates a cross sectional view of the steam turbine with the casing according to another embodiment of the present invention.
- FIG 2: illustrates a cross sectional view of the steam turbine with the casing according to yet another embodiment of the present invention.
- FIG 3A: illustrates a cross sectional view of the steam turbine with the casing according to further another embodiment of the present invention.
- FIG 3B: illustrates a cross sectional view of the steam turbine with the casing according to still another embodiment of the present invention.
- FIG 3C: illustrates a cross sectional view of the steam turbine with the casing according to yet another embodiment of the present invention.
- FIGS 4A-4D: illustrate different types of cavities provided in the casing of the steam turbine shown in FIGs 1 to 3C.

Various embodiments are described with reference to the drawings, wherein like reference numerals are used to refer to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

The terms 'heating' and 'warming' are interchangeably used throughout the document.

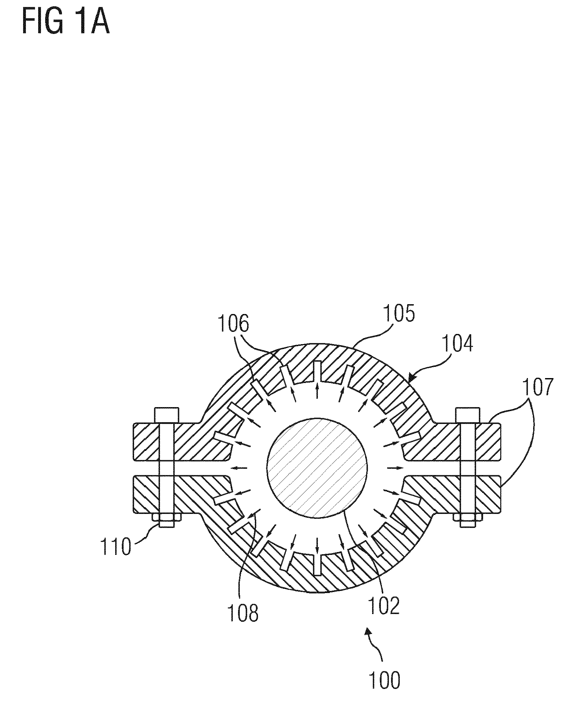

FIG 1A illustrates a cross sectional view of a steam turbine 100 with a casing 104 according to one embodiment of the present invention. The steam turbine 100 comprises a rotor 102 extending along a longitudinal axis and the casing 104 enclosing the rotor 102. The casing 104 is divided into two halves. Both the halves securely enclose the rotor 102 and are fastened together using fastening means 110, such as nut and bolt arrangement. Each of the halves comprises a casing body 105 and a pair of flanges 107. The flanges 107 are provided to fasten both the halves using the fastening means 110. It is understood that, the casing 104 referred herein may be an inner casing and/or outer casing.

According to one embodiment, the casing 104 is provided with cavities 106 on the inner surface of the casing 104. The cavities 106 are provided on the flanges 107 and the casing body 105 along the longitudinal axis. The cavities 106 are hollow spaces adapted to be filled with heating medium 108, such as steam, flue gas and hot air during the start-up process of the steam turbine 100. In an exemplary implementation, the cavities 106 may include hollow spaces of circular cross section. In another exemplary implementation, the cavities 106 may include hollow space of rectangular cross section. One can envision that the cavities 106 may be hollow space of any cross section such as hexagonal, square and so on. One skilled in the art may understand that some of the cavities 106 may be of circular cross section while remaining cavities 106 may be of non-circular cross section. The cavities 106 can be straight or contoured.

Although the heating medium 108 such as steam from auxiliary boiler, flue gas from gas turbine or hot air from compressor can be used for warming the casing 104, in the following description, steam (stagnant steam or flowing steam) is used as example of the heating medium 108 to describe embodiments of the present invention.

It is well known fact that temperature of the casing 104 of the steam turbine 100 is much lower than temperature of steam entering the steam turbine 100 without proper after start-up process. To avoid thermal stress on the casing 104, difference between the temperature of the casing 104 and the temperature of the steam needs to be kept minimal by warming the casing 104 during start-up process of the steam turbine 100. Also, it is to be ensured that time required to warm up the casing during start-up process is less to reduce delay in operating the steam turbine 100, i.e., to increase productive time of the steam turbine 100. According to the present invention, during the process of warming the casing 104, the cavities 106 are filled up with steam 108. The steam 108, filled in the cavities 106, transfers heat to the corresponding portions of the casing 104, thereby efficiently warming the casing 104. Advantageously, the casing 104 is heated faster as the steam 108 is filled deep into the casing 104 through the cavities 106 unlike the conventional warming technique in which the surface of steam turbine casing is exposed to the steam 108. Accordingly, the time required to heat up the casing 104 during the start-up process is less compared to the conventional warming technique. Thus, delay in operating the steam turbine 100 is significantly reduced.

The warming up of the casing 104 causes increase in temperature of the casing 104 and hence difference between the temperature of the casing 104 and the temperature of the steam entering the steam turbine 100 after start-up process is minimized. As a result, thermal stress on the casing 104 is minimized.

As the steam 108 warms up the casing 104, the steam 108 gets condensed. To remove the condensate from the cavities 106, the cavities 106 are provided with means for removing the condensate. In an example embodiment, the means for removing the condensate include a downward slope provided to the cavities 106. In another example embodiment, the means for removing the condensate include a mechanical means. The means for removing the condensate assists in draining the condensate from the cavities 106 during start-up process and after shut-down operation.

It can be noted that dimension of the cavities 106 may be determined based on design parameters associated with the casing 104. Similarly, the number of cavities 106 provided on the inner surface of the casing 104 may vary with respect to the design parameters of the casing 104. In some embodiments, the number of cavities 106 and the dimension of the cavities 106 may vary with the thickness of the casing 104. For example, the number and dimension of cavities 106 provided on the flanges 107 is higher than the number and dimension of the cavities 106 on the casing body 105. It is understood that the dimension, shape, and number of cavities 106 is determined based on rate of heating desired. For example, heat transfer from the steam 108 to the casing 104 is faster if the dimensions are large and number of cavities 106 is more. On the other hand, heat transfer rate may comparatively reduce with smaller dimension and less number of the cavities 106.

In addition to the use of cavities 106 to warm up the casing 104, the inner surface of the casing 104 is exposed to the steam 108 for faster heating of the casing 104.

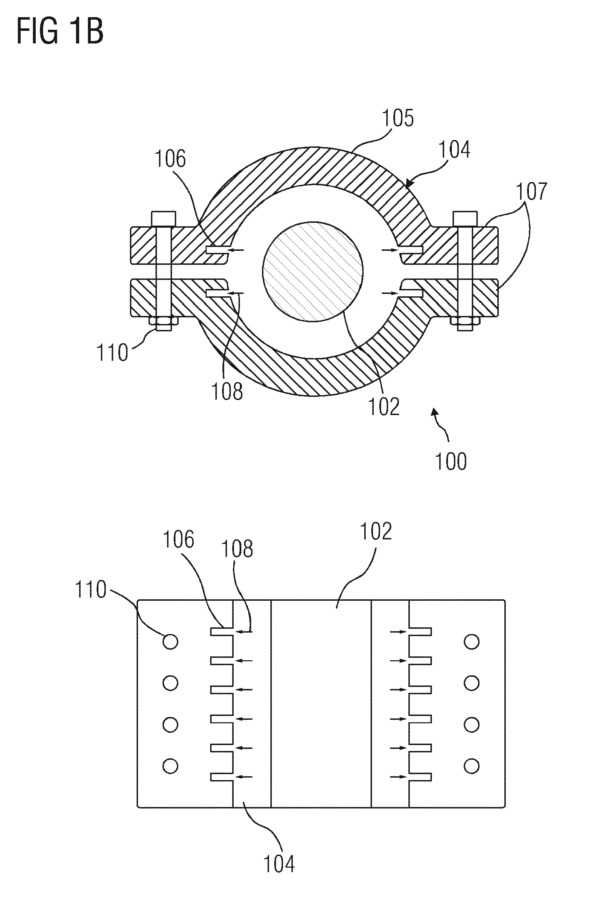

FIG 1B illustrates a cross sectional view of the steam turbine 100 with the casing 104 according to another embodiment of the present invention. In the steam turbine 100 of FIG 1B, the flanges 107 of the casing 104 are provided with the cavities 106. This is because the flanges 107 require more time for heating as the flanges 107 generally are having more thickness than the casing body 105. In order to avoid delay in start-up of the steam turbine 100, the cavities 106 in the flanges 107 carry steam 108 which warm up the flanges 107 faster. As can be seen, the cavities 106 are provided in the flanges 107 along length of the casing 104. This also facilitates in faster heating of flanges 107. It can be noted that, the casing body 105 may be heated by exposing the inner surface to steam 108 particularly when the thickness of the casing 104 is less than the thickness of flanges 107.

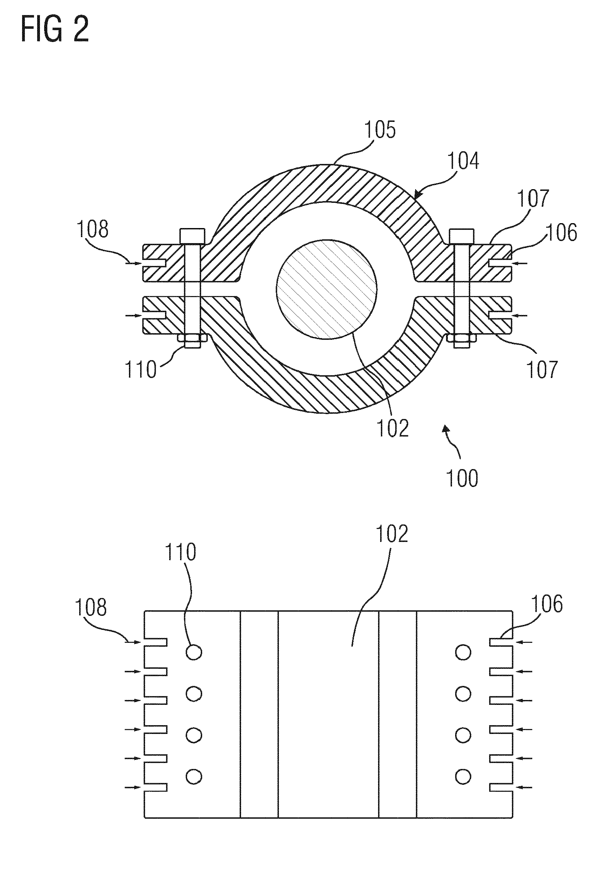

FIG 2 illustrates a cross sectional view of the steam turbine 100 with the casing 104 according to yet another embodiment of the present invention. In FIG 2, the steam turbine 100 comprises casing 104 which is provided with cavities 106 on outer surface of flanges 107. The cavities 106 are provided along the length of the casing 104.

During start-up process of the steam turbine 100, steam 108 from an external steam source (e.g., an auxiliary boiler) is filled in the cavities 106. For example, each of the cavities 106 may be connected with conduit to fill the steam from the external steam source. The steam 108, filled in the cavities 106, transfers heat to the flanges 107, thereby warming the flanges 107 during the start-up process. The casing body 105 may be heated by simultaneously exposing the inner surface of the casing body 105 to steam 108. This is because the casing body 105 is thinner than the flanges 107. It can be noted that even though the flanges 107 are thicker, heating of the flanges 107 may take around same time as the casing body 105.

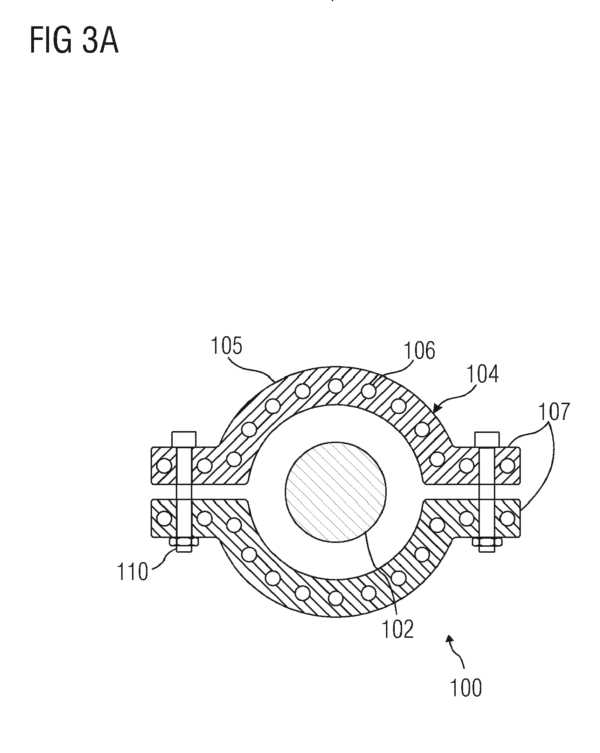

FIG 3A illustrates a cross sectional view of the steam turbine 100 with the casing 104 according to further another embodiment of the present invention. In FIG 3A, the casing 104 is provided with hollow portions 106 along the longitudinal axis of the casing 104. The hollow portions 106 may be circular, rectangular or of any shape. The number of hollow portions 106 may depend on design of the casing 104 and heat transfer rate desired. The hollow portions are provided on the casing body 105 as well as the flanges 107 of the casing 104.

In one exemplary embodiment, each of the hollow portions 106 has an inlet provided on face of the casing 104 and an outlet provided on the inner surface of the casing 104. The inlet of each hollow portion 106 is connected to a conduit for filling steam into the hollow portions 106 from an external steam source (e.g., auxiliary boiler). The steam filled in the hollow portions 106 transfer heat to the casing body 105 and the flanges 107, thereby warming up the casing 104 during start-up process of the steam turbine 100. Due to heat transfer to the casing 104, the steam gets condensed. The condensate is drained through the outlet.

In another exemplary embodiment, each hollow portion 106 has an inlet provided on front face of the casing 104 and an outlet provided on rear face of the casing 104. The inlet is connected to a conduit for filling steam from the external steam source. As the steam is supplied into the inlet towards the outlet, the steam transfers heat to surface of the respective hollow portions 106, thereby warming the casing 104. The condensate produced after heat transfer is drained via the outlet.

The hollow portions 106 assist in faster warming of the casing 104. Thus, delay in operation of the steam turbine 100 is reduced and productive time can be increased.

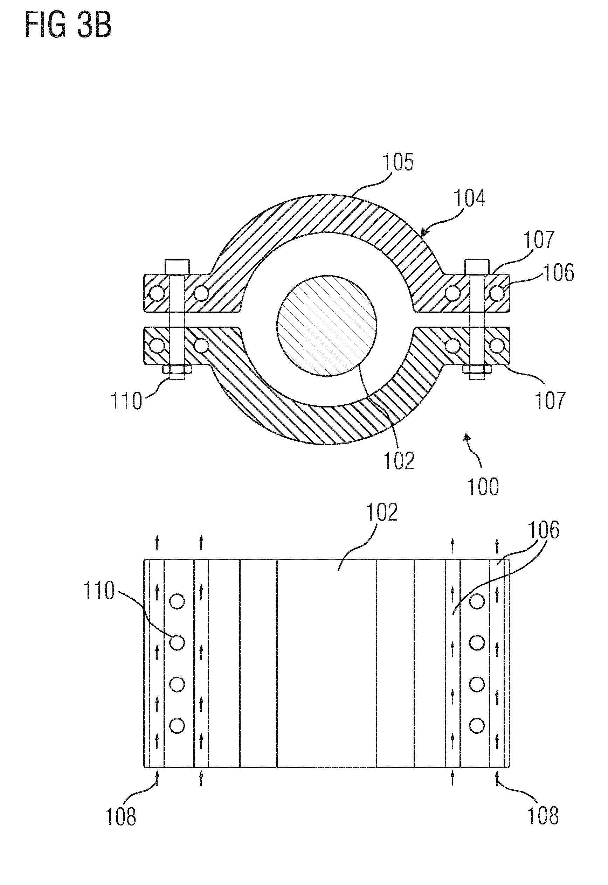

FIG 3B illustrates a cross sectional view of the steam turbine 100 with the casing 104 according still another embodiment of the present invention. In FIG 3B, the flanges 107 are provided with hollow portions 106 running along longitudinal axis. Each of the hollow portions 106 has an inlet provided on the front face of the casing 104 and an outlet provided on the rear face of the casing 104. During start-up process of the steam turbine 100, steam 108 is supplied into the inlet of hollow portions 106 from an external steam source via conduit. The flanges 107 absorb heat from the steam 108 while the steam 108 passes from the inlet to the outlet. Due to this, the flanges 107 are warmed up faster. The condensate formed due to heat transfer is drained from the outlet of the respective hollow portions 106. The casing body 105 may be warmed by exposing the inner surface to the steam 108. Alternatively, the casing body 105 may be warmed up using any of the techniques mentioned above.

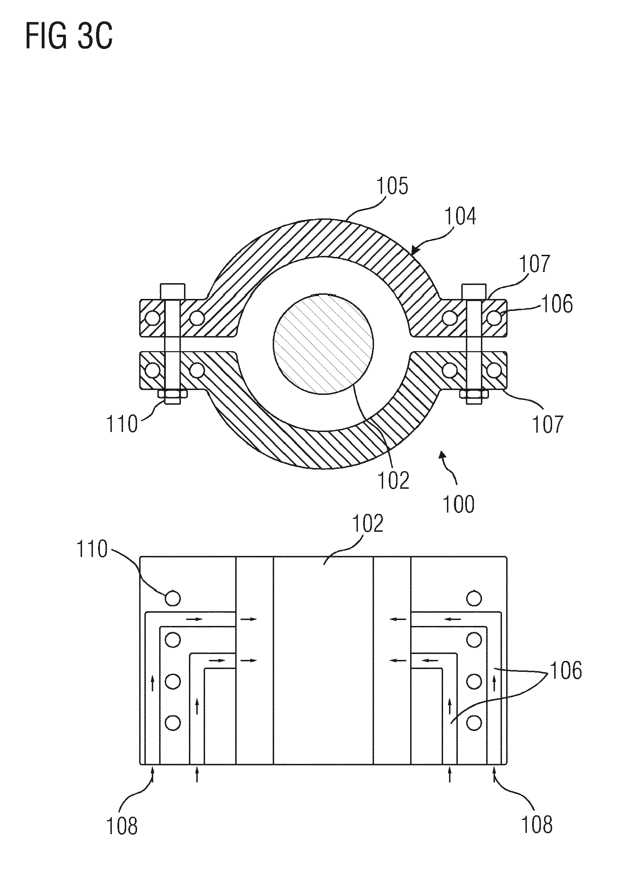

FIG 3C illustrates a cross sectional view of the steam turbine 100 with the casing 104 according to yet another embodiment of the present invention. In FIG 3C, the hollow portions 106 has an inlet provided on the front face of the casing 104 and an outlet provided on the inner surface of the casing 104. In this embodiment, condensate formed from the steam 108 after heat transfer is drained through the outlet provided on the inner surface of the casing 104.

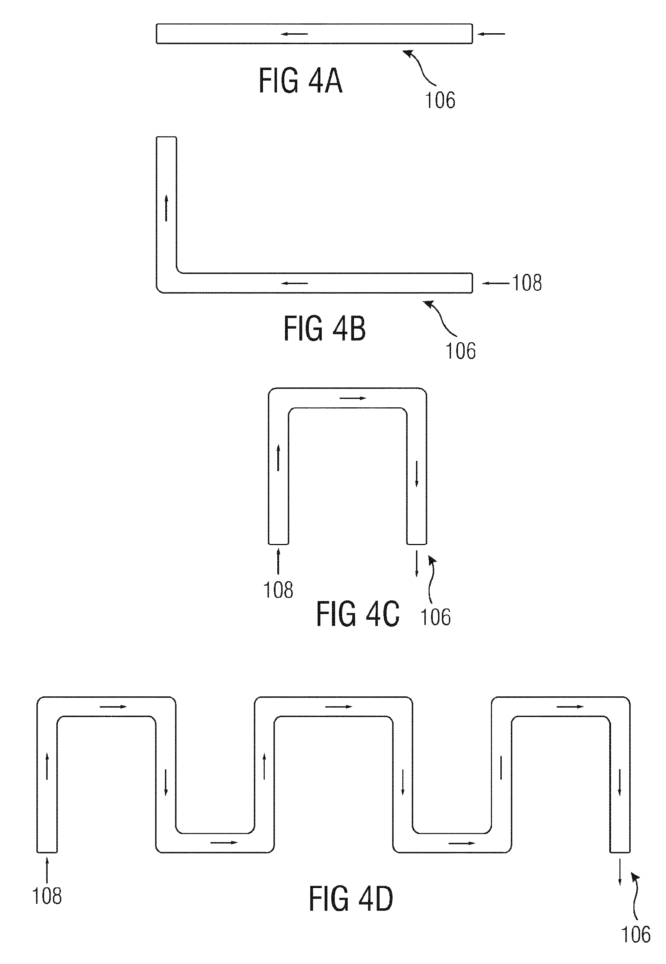

FIGS 4A-4D illustrate different types of cavities provided in the casing 104 of the steam turbine 100. FIG 4A illustrates a straight cavity 106 provided on the casing 104. This type of cavity 106 is more suitable for thin flanges 107. FIG 4B illustrates 'L' shaped cavity 106 provided on the flanges 107 of the casing 104. This type of cavity 106 is more suitable for thick flanges 107.

FIG 4C illustrates a 'U' shaped cavity 106 provided on the flanges 107 of the casing 104. The 'U' shaped cavity 106 allows the steam 108 to enter from one port and condensate to drain from another port. FIG 4D illustrates a zig-zag shaped cavity 106 provided on the flanges 107 of the casing 104. The zig-zag shaped cavity 106 has one inlet and one outlet unlike the straight and 'L' shaped cavity. The zig-zag shaped cavity 106 enables steam to remain in the cavity for more amount of time and hence provide efficient transfer of heat to the casing 104. The cavities 106 can be provided in the casing 104 during casting. It can be noted that shapes of cavities can be other than those mentioned above.

While the present invention has been described in detail with reference to certain embodiments, it should be appreciated that the present invention is not limited to those embodiments. In view of the present disclosure, many modifications and variations would be present themselves, to those skilled in the art, without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

## Claims

1. A steam turbine (100) comprising:
a rotor (102); and
a casing (104) enclosing the rotor (102), **characterized in that** the casing (104) is provided with a means for warming the casing (104).

2. The steam turbine (100) according to claim 1, wherein the at least one means (106) for warming the casing (104) is adapted to be filled with heating medium during start-up process of the steam turbine (100).

3. The steam turbine (100) according to claim 1, wherein the means (106) for warming the casing (104) comprises at least one cavity provided on the inner surface of the casing (104).

4. The steam turbine (100) according to claim 1, wherein the means (106) for warming the casing (104) comprises at least one cavity provided on the outer surface of the casing (104).

5. The steam turbine (100) according to claim 1, wherein the means (106) for warming the casing (104) comprises at least one hollow portion extending along a longitudinal axis of the casing (104).

6. The steam turbine (100) according to claim 1, wherein the at least one hollow portion is provided with an inlet on face of the casing (104).

7. The steam turbine (100) according to any of the preceding claims 3 to 5, wherein the means (106) for warming the casing (104) is provided with a means for removing condensate.

8. The steam turbine (100) according to claim 1, wherein the casing (104) comprises at least one of inner casing and outer casing.
